# EUROPÄISCHE PATENTSCHRIFT

(11) **EP 4 286 587 B1**
(45) Veröffentlichungstag und Bekanntmachung des Hinweises auf die Patenterteilung: **26.03.2025**
(21) Anmeldenummer: 23176412.7
(22) Anmeldetag: 31.05.2023
(51) Int. Cl.: E01B 35/12, E01B 35/00, G01B 5/30

(54) **EINSENKUNGSMESSEINRICHTUNG FÜR BAHNSCHIENEN**
LOWERING MEASURING DEVICE FOR RAILWAY RAILS
DISPOSITIF DE MESURE D'AFFAISSEMENT POUR RAILS DE CHEMIN DE FER

(30) Priorität: 31.05.2022 DE 102022113760
(43) Veröffentlichungstag der Anmeldung: 06.12.2023
(73) Patentinhaber: NaKorid GmbH, 63584 Gründau (DE)
(72) Erfinder: SCHMIDT, Simon, 63584 Gründau (DE)
(74) Vertreter: Tergau & Walkenhorst Intellectual Property GmbH

(56) Entgegenhaltungen:
- DE-C- 816 440
- DE-C- 850 301
- DE-U1- 20 300 537
- US-A- 4 794 697

## Beschreibung

Die Erfindung umfasst eine einfach zu montierende und zu bedienende Einsenkungsmesseinrichtung für Bahnschienen zur Überwachung der maximalen Schienen-Einsenkung bei Überfahrt eines Schienenfahrzeuges.

Bei Überfahrt der Bahnschiene durch den schienengebundenen Verkehr wird das Gewicht des Zuges über die Achsen und Räder auf die Schiene übertragen und von dort durch die fest verschraubten und auf dem Schotter aufliegenden Schwellen aufgenommen und über den Schotter abgeleitet.

Eine derartige Einrichtung ist aus der DE850301C, US4794697A, DE816440C und DE20300537U1 bekannt.

Es ist bekannt, dass sich der Schotter durch die stetige Beanspruchung mit der Zeit abnutzt. Durch schlechte Untergrund-Bedingungen und Witterungseinflüsse kann der Abnutzungseffekt des Schotters verstärkt werden.

Der Abnutzungseffekt des Schotters zeigt sich an den spitzen Kanten der Schottersteine, welche durch Aneinanderreiben abrunden und sich nicht mehr verhaken können. Dadurch geraten die Steine bei Belastung durch die Schwelle in Bewegung, wodurch sich die Schwelle mit dem Gleis nach unten absenkt.

Durch die Einsenkung der Schiene wird die Belastung auf das Rad-Schiene-System sowie die Schiene und den Oberbau verstärkt, bis es schließlich zu Materialversagen, zum Beispiel Schienenbruch, Weichenstörung (keine Endlage), Laschenbruch bei Isolierstößen, Schwellenbruch etc. kommt. Zudem leidet der Fahrkomfort der Personenzüge, da die Schläge ab einer bestimmten Stärke nicht mehr vom Dämpfungssystem des Fahrwerks aufgenommen werden können.

Um das Einsenken der Schiene zu verhindern und damit die Lebensdauer des Gleises, insbesondere der Isolierstöße, Herzstücke, Weichen etc. zu verbessern, werden mittels auf den Schienen fahrenden Messzügen die Gleislage bzw. die Schieneneinsenkung ermittelt und bei Toleranzüberschreitung der Oberbau durch Stopfen und Verdichten des Schotters oder mittels Schotter- oder Schwellentausch instandgesetzt.

Der Einsatz eines Messzugs ist jedoch nicht nur mit einem hohen finanziellen Aufwand verbunden, sondern erfordert auch eine betriebliche Regelung. Des Weiteren müssen die Messdaten ausgewertet und den Strecken zugeordnet, sowie die Ergebnisse an die entsprechenden Fach- und Betriebsstellen weitergegeben werden.

Ein weiterer Nachteil des Messzugs ist dessen Gewichts- und Lastverteilung, welche nicht den realen Gegebenheiten entsprechen, so dass mittels der so gewonnenen Messdaten zu der Schieneneinsenkung keine korrekte Aussage über den tatsächlichen Zustand des Oberbaus getroffen werden kann.

Aufgabe der vorliegenden Erfindung ist es, eine einfache Einsenkungsmesseinrichtung für Bahnschienen vor Ort zur Verfügung zu stellen, welche im normalen Instandhaltungsprozess durch die Instandhaltungsmitarbeiter montiert und abgelesen werden kann.

Die Aufgabe wird erfindungsgemäß gelöst durch eine Einsenkungsmesseinrichtung mit den Merkmalen des Anspruchs 1.

Demnach ist eine Einsenkungsmesseinrichtung für Bahnschienen vorgesehen, umfassend eine mittels eines Verspann-Elementes an einer Bahnschiene befestigbare Halterung, einen in/an der Halterung verschiebbar gelagerten Messstab, an dessen unterem Ende eine zur Abstützung auf einem Schotterbett oder dergleichen vorgesehene Gegendruckplatte oder Stütze befestigt oder ausgebildet ist, ferner eine an der Halterung befestigte oder in sie integrierte Messskala zum Ablesen einer Verschiebung des Messstabs gegenüber der Halterung, sowie ein Messstab-Widerstandselement zur kraft- oder reibschlüssigen Hemmung der Verschiebbarkeit des Messstabs in der Weise, dass eine beim Überfahren der Bahnschiene durch ein Schienenfahrzeug erreichte maximale Verschiebung des Messstabs erhalten bleibt.

Durch eine vorzugsweise an der Einsenkungsmesseinrichtung montierte Erfassungseinheit kann der Messwert digitalisiert und standortunabhängig übertragen werden, um notwendige Dokumentationsprozesse zu ermöglichen.

Vorteilhafte Ausführungen sind Gegenstand der Unteransprüche und der nachfolgenden detaillierten Beschreibung.

Die mit der Erfindung erzielten Vorteile sind insbesondere:
- Messung der Schienen-Einsenkung an den relevanten Messpunkten.
- Messung der tatsächlichen Schienen-Einsenkung statt der ungenauen Schwellenabsenkung.
- Hohe Messgenauigkeit (maximal 1 mm Toleranz) und sichere Ablesegenauigkeit.
- Einfache Handhabung und schnelle Montage des Messgerätes am Gleis.
- Einsetzbar auch an Herzstücken und im Bereich von Isolierstößen.
- Die Oberbau-Instandsetzung lässt sich ab sofort auf sicherer Faktenbasis effizient planen und durchführen.
- Einfach zu installieren vor Ort.
- Leicht zu transportieren (nur ca. 160 g pro Einheit).

Ein Ausführungsbeispiel der Erfindung wird anhand einer Zeichnung näher erläutert. Darin zeigen:

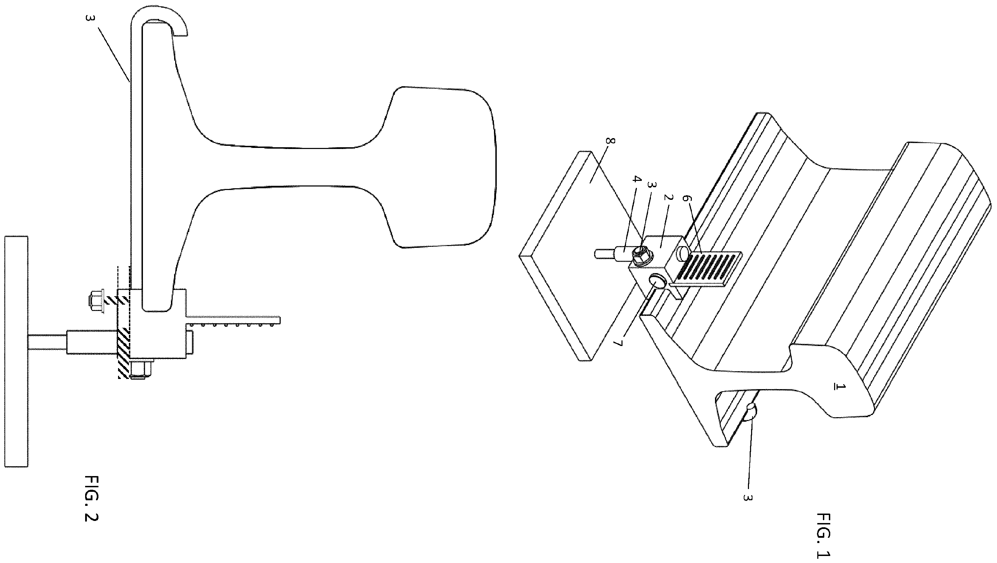

- FIG. 1: zeigt eine räumliche Ansicht der erfindungsgemäßen Einsenkungsmesseinrichtung, hier an einer Bahnschiene montiert.
- FIG. 2: zeigt eine Seitenansicht der erfindungsgemäßen Einsenkungsmesseinrichtung mit Ausführung einer Hakenschraube und einer Klemmschraube, hier an einer Bahnschiene montiert.
- FIG. 3: zeigt das Prinzip des Messstab-Widerstandselements in Form einer Kugeldruckschraube.
- FIG. 4: zeigt die Schienen-Einsenkung, ablesbar durch den Messstab in Verbindung mit der Messskala.
- FIG. 5: zeigt eine weitere räumliche Ansicht der erfindungsgemäßen Einsenkungsmesseinrichtung, hier mit feststellbarem Zeiger für den Messstab, einem Griff für das Verspannelement inkl. Federmechanismus.
- FIG. 6: zeigt eine Seitenansicht der erfindungsgemäßen Einsenkungsmesseinrichtung mit allen Ausführungen, hier an einer Bahnschiene montiert und mit der Gegendruckplatte auf einem Schotterbett abgestützt.

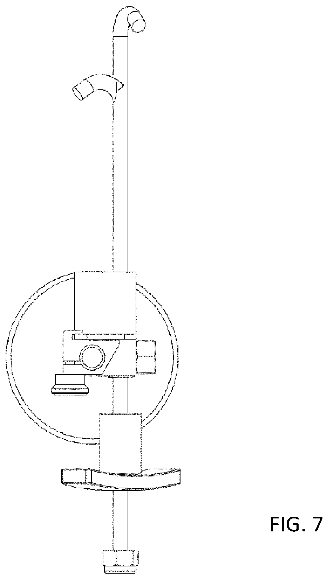

- FIG. 7: zeigt eine Draufsicht der erfindungsgemäßen Einsenkungsmesseinrichtung mit allen Ausführungen.

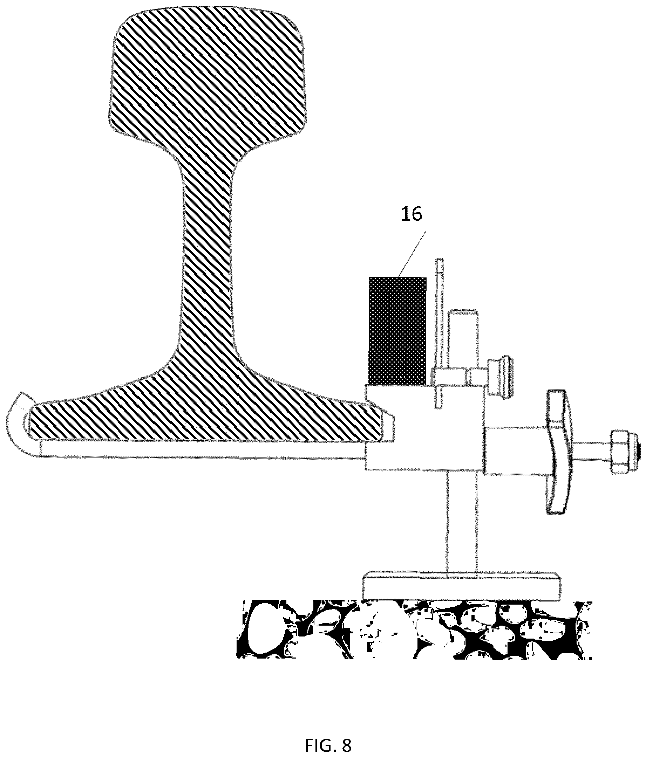

- FIG. 8: zeigt eine weitere Seitenansicht der erfindungsgemäßen Einsenkungsmesseinrichtung, hier mit digitalen Erfassungs- und Übermittlungseinrichtung

Die in den Figuren dargestellte Einsenkungsmesseinrichtung dient zur quantitativen Erfassung des Ein- oder Absenkens von Bahnschienen gegenüber einem Schotterbett bei der Überfahrt eines Schienenfahrzeugs bzw. Zuges.

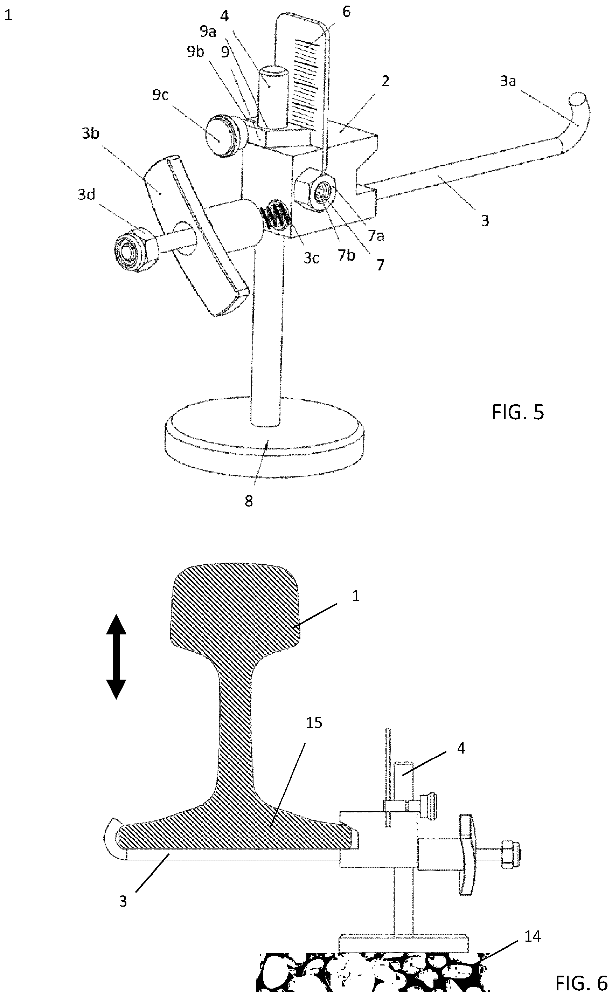

Die beispielsweise in FIG. 5 in der Gesamtheit gut erkennbare Einsenkungsmesseinrichtung umfasst eine gehäuseartige Halterung 2, die an ihrer vom Betrachter abgewandten Rückseite eine klauenartige Ausnehmung aufweist, die während der bestimmungsgemäßen Verwendung zur Anlage an einer Flanke eines Schienenfußes 15 einer Bahnschiene 1 vorgesehen ist. Ein als Haken 3a ausgebildetes, in der normalen Ausrichtung horizontal gegenüber der Halterung 2 verschiebliches Halteelement untergreift während des Messeinsatzes den Schienenfuß 15. Die Halterung 2 liegt dabei fest an der einen Flanke des Schienenfußes 15 an und umgreift sie, und der Haken 3a liegt an der anderen Flanke an und umgreift sie, wobei durch eine in die Halterung 2 integrierte Feder 3c eine Verspannung erfolgt. Die Verspannung ist zur Montage oder Demontage bedarfsweise mit Hilfe eines Griffs 3b lösbar, der hier im Beispiel gemäß FIG. 5 auf der dem Betrachter zugewandten Seite der Halterung 2 angeordnet ist. Der Haken 3a, der Griff 3b und die Feder 3c bilden zusammen mit einer Sicherungsmutter 3d ein arretierbares Verspann-Element 3, mittels dessen die Halterung 2 für den Messbetrieb fest und spielarm mit der Bahnschiene 1 verbindbar ist.

Die Montage der Einsenkungsmesseinrichtung an der Schiene 1 ist denkbar einfach: Man muss einfach den Haken 3a an einer durch teilweises Entfernen oder Lockern des Schotterbetts gut zugänglichen Stelle unter der Schiene 1 durchführen, am Schienenfuß 15 einhaken und arretieren. Dieser Zustand ist in FIG. 6 im Querschnitt bzw. in Seitenansicht dargestellt. Zur späteren Demontage wird die Sicherungsmutter 3d gelöst, die Verspannung durch Ziehen oder Drehen am Griff 3b aufgehoben, somit die Verhakung gelöst und die Einsenkungsmesseinrichtung wieder herausgezogen.

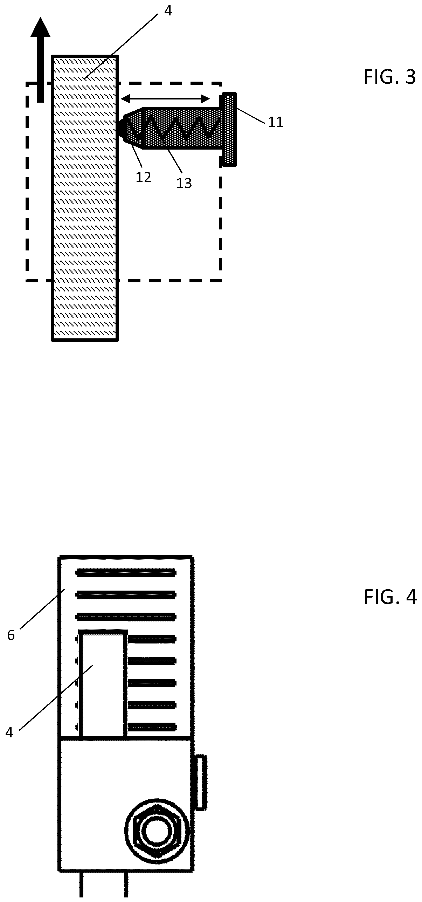

Im arretierten Zustand ist die Halterung 2 wie erwähnt fest mit der Bahnschiene 1 verbunden. Wenn sich die Bahnschiene 1 infolge von Belastung senkt und später wieder hebt, folgt die Halterung 2 dieser Senk- und Hebebewegung in vertikaler Richtung, wie in FIG. 6 durch den Doppelpfeil angedeutet. Zur Erfassung dieser Senk- und Hebebewegung ist ein Messstab 4 in vertikaler Ausrichtung und vertikal verschieblich in/an der Halterung 2 gelagert. Der Messstab 4 ist dazu mit geringem Spiel gleitend in einer hülsenartigen Messstabaufnahme gelagert und steht nach oben und nach unten aus der der Halterung 2 heraus. Am unteren Ende ist der Messstab 4 fest mit einer Gegendruckplatte 8 verbunden, die sich im Messbetrieb flächig auf dem umliegenden Schotter 14 abstützt, wie in FIG. 6 ersichtlich. Infolge der erwähnten Senk-Bewegung der Bahnschiene 1 bewegt sich der Messstab 4 relativ zur Halterung 2 in der Messstabaufnahme nach oben, so dass das obere Stabende während der maximalen Absenkung der Bahnschiene 1 maximal weit nach oben über die Halterung 2 übersteht. Die Auslenkung des Messstabs 4 ist wie in FIG. 4 schematisch angedeutet gegenüber einer fest mit der Halterung 2 verbundenen Messskala 6 ablesbar.

Durch ein Messstab-Widerstandselement 7 wird erreicht, dass der Messstab 4 nach Erreichen der maximalen Auslenkung nicht wieder nach unten sinkt, wenn sich die Bahnschiene 1 wieder nach oben bewegt. Dazu drückt wie in FIG. 3 dargestellt ein in der Halterung 2 gelagerter federbelasteter Druckstift 7a, vorzugsweise mit einer drehbar gelagerten Kugel 12 an der Spitze in radialer Richtung auf den in der Messstabaufnahme gelagerten Messstab 4 und fixiert diesen im Ruhezustand reibschlüssig in seiner Höhe. Die Federkraft ist derart gewählt, dass beim Absenken der Bahnschiene 1 während der Passage eines Schienenfahrzeugs oder Zugs die durch die Kugel 12 in Verbindung mit der Feder 13 bewirkte Reibung problemlos überwunden wird und der Messstab 4 sich gegenüber der Halterung 2 hebt, dass jedoch ein Zurückfallen oder Absenken nach unten infolge seiner Gewichtskraft unterbunden wird. Auf diese Weise wird die erreichte Maximalauslenkung des Messstabs 4 gewissermaßen gespeichert oder festgehalten.

Zur Durchführung und Justierung des Messstabs 4 in der Messstabaufnahme kann mit Hilfe der schraubenartigen Druckstiftsicherung 7b die Federkraft auf die Kugel 12 bedarfsweise kompensiert werden, so dass der Messstab 4 in diesem Fall frei in der Messstabaufnahme verschieblich ist.

Zur genauen Ablesung der (Maximal-) Auslenkung des Messstabs 4 an der Messskala 6 ist an dem Messstab 4 ein Zeigerelement lösbar befestigt. Das Zeigerelement weist einen Zeiger 9, eine Messstabdurchführung 9a, eine Verengungslücke 9b und eine Feststellschraube 9c auf. Mit Hilfe der beispielsweise als Rändelschraube ausgebildeten Feststellschraube 9c kann das auf dem Messstab 4 sitzende und ihn umgreifende Zeigerelement zur Einstellung bzw. Kalibrierung des Nullpunktes gelöst und gegenüber dem Messstab 4 nach unten oder oben verschoben werden. Anschließend wird die Feststellschraube 9c wieder festgezogen.

Zusammengefasst kann durch Montage der Einsenkungsmesseinrichtung an die Bahnschiene 1 bei Überfahrt eines Schienenfahrzeugs die maximale Schieneneinsenkung durch einfache Ablesung an der Messskala 6 zuverlässig ermittelt werden. Die Einsenkungsmesseinrichtung bestehend zu diesem Zweck in vorteilhafter Ausgestaltung unter anderem aus einer Halterung 2, einem Verspann-Element 3, einem Messstab 4, einer Messskala 6, einem Messstab-Widerstands-element 7 und einer Gegendruckplatte 8.

Die Montage an der Bahnschiene erfolgt mittels des Verspann-Elements 3, idealerweise bestehend aus einem Haken 3a, einem Griff 3b, einer Feder 3c und einer Sicherungsmutter 3d.

Vorteil der Ausführung mittels Feder 3c ist, dass die Montage erleichtert wird, da durch die Federkraft die Messeinrichtung am Schienenfuß 15 hängen bleibt und durch den Griff 3b, in dem idealerweise die Feststellschraube oder Sicherungsmutter 3d integriert ist, nur noch festgeschraubt werden muss.

Durch das Messstab-Widerstandselement 7, welches in zweckdienlicher Ausgestaltung einen Druckstift 7a mit einer andruckseitigen Kugel 12 aufweist, die durch eine Feder 13 radial an den Messstab 4 gedrückt wird, wird erreicht, dass der Messstab 4 in der Maximalauslenkung verbleibt. Damit kann die Maximalauslenkung später, wenn das Schienenfahrzeug vorbeigefahren ist und die Bahnschiene 1 wieder gefahrlos zugänglich ist, einfach abgelesen werden. Durch die lösbare Anbringung des Zeigers 9 am Messstab 4 kann eine einfache Kalibrierung oder Nullpunktfestlegung erfolgen.

Durch Montage einer Erfassungseinheit 16 kann der Messwert digital erfasst und standortunabhängig übertragen werden, etwa an eine Cloud, um notwendige Auswertungs- und Dokumentationsprozesse zu ermöglichen.

### Bezugszeichenliste

- 1: Bahnschiene
- 2: Halterung
- 3: Verspann-Element
- 3a: Haken
- 3b: Griff
- 3c: Feder
- 3d: Sicherungsmutter
- 4: Messstab
- 6: Messskala
- 7: Messstab-Widerstandselement
- 7a: Druckstift
- 7b: Druckstiftsicherung
- 8: Gegendruckplatte
- 9: Zeiger
- 9a: Messstabdurchführung
- 9b: Verengungslücke
- 9c: Feststellschraube
- 11: Kugeldruck-Schraube
- 12: Kugel
- 13: Feder
- 14: Schotterbett
- 15: Schienenfuß
- 16: Erfassungseinheit

## Patentansprüche

1. Einsenkungsmesseinrichtung für Bahnschienen (1), umfassend eine mittels eines Verspann-Elementes (3) an einer Bahnschiene (1) befestigbare Halterung (2), einen in/an der Halterung (2) verschiebbar gelagerten Messstab (4), an dessen unterem Ende eine zur Abstützung auf einem Schotterbett (14) vorgesehene Gegendruckplatte (8) oder Stütze befestigt oder ausgebildet ist, ferner eine an der Halterung (2) befestigte oder in sie integrierte Messskala (6) zum Ablesen einer Verschiebung des Messstabs (4) gegenüber der Halterung (2), sowie ein Messstab-Widerstandselement (7) zur kraft- oder reibschlüssigen Hemmung der Verschiebbarkeit des Messstabs (4) in der Weise, dass eine beim Überfahren der Bahnschiene (1) durch ein Schienenfahrzeug erreichte maximale Verschiebung des Messstabs (4) erhalten bleibt, **dadurch gekennzeichnet, dass** das Messstab-Widerstandselement (7) einen federbelasteten Druckstift (7a) mit einer drehbar gelagerten Kugel (12) an der Spitze und eine schraubenartige Druckstiftsicherung (7b), mit der eine Federkraft auf die Kugel (12) bedarfsweise kompensiert werden kann, umfasst.

2. Einsenkungsmesseinrichtung nach Anspruch 1, wobei das Verspann-Element einen Haken (3a), einen Griff (3b), einen Federmechanismus (3c) und eine Sicherungsmutter (3d) aufweist.

3. Einsenkungsmesseinrichtung nach Anspruch 1 oder 2 mit einem feststellbarem Zeigerelement, das einen Zeiger (9), eine Messstabdurchführung (9a), eine Verengungslücke (9b) und eine Feststellschraube (9c) umfasst.

4. Einsenkungsmesseinrichtung nach einem der Ansprüche 1 bis 3, wobei der gezeigte Messwert auf der Messskala (6) mittels einer Erfassungseinheit (16) digitalisiert und standortunabhängig übertragen sowie ausgewertet werden kann.

## Claims

1. A lowering measuring device for railway rails (1) comprising a mounting (2) which is able to be fastened to a railway rail (1) by means of a bracing element (3), a measuring rod (4) displaceably mounted in/on the mounting (2), at the lower end of which a counterpressure plate (8) or support is fastened or formed which is provided for support on a ballast bed (14), furthermore a measuring scale (6), fastened on the mounting (2) or integrated into it for reading a displacement of the measuring rod (4) with respect to the mounting (2), and a measuring rod resistance element (7) for the force- or friction-fitting inhibiting of the displaceability of the measuring rod (4), in such a way that a maximum displacement of the measuring rod (4) which is reached by a rail vehicle on travelling over the railway rail (1) is maintained, **characterized in that** the measuring rod resistance element (7) comprises a spring-loaded pressure pin (7a) with a rotatably mounted ball (12) at the tip and a screw-like pressure pin protection (7b), by which a spring force onto the ball (12) can be compensated as required.

2. The lowering measuring device according to Claim 1, wherein the bracing element has a hook (3a), a grip (3b), a spring mechanism (3c) and a securing nut (3d).

3. The lowering measuring device according to Claim 1 or 2 with a detectable pointer element, which comprises a pointer (9), a measuring rod lead-through (9a), a constriction gap (9b) and a setscrew (9c).

4. The lowering measuring device according to one of Claims 1 to 3, wherein the shown measurement value on the measuring scale (6) can be digitized by means of a detection unit (16) and transmitted in a location-independent manner and evaluated.

## Revendications

1. Dispositif de mesure d'affaissement pour rails de chemin de fer (1), comprenant une fixation (2) pouvant être fixée sur un rail de chemin de fer (1) au moyen d'un élément de serrage (3), une jauge (4) disposée mobile dans/contre la fixation (2), à l'extrémité inférieure de laquelle une plaque de contre-pression (8) ou un étai pour l'appui sur un lit de ballast (14) est fixé(e) ou formé(e), en outre une échelle de mesure (6) fixée sur la fixation (2) ou intégrée en elle pour lire un décalage de la jauge (4) par rapport à la fixation (2), ainsi qu'un élément de résistance (7) de jauge pour bloquer par force ou par adhérence la capacité de décalage de la jauge (4) de manière à ce qu'un décalage maximal de la jauge (4) atteint lors du franchissement du rail de chemin de fer (1) par un véhicule sur rail soit maintenu, **caractérisé en ce que** l'élément de résistance (7) de jauge comprend une tige de pression (7a) contrainte par ressort avec une bille disposée rotative (12) à la pointe et une fixation de tige de pression (7b) hélicoïdale, avec laquelle une force de rappel sur la bille (12) peut être compensée selon les besoins.

2. Dispositif de mesure d'affaissement selon la revendication 1, dans lequel l'élément de serrage présente un crochet (3a), une poignée (3b), un mécanisme de ressort (3c) et un écrou de blocage (3d).

3. Dispositif de mesure d'affaissement selon la revendication 1 ou 2 comprenant un élément d'aiguille fixable qui comprend une aiguille (9), un passage de jauge (9a), un trou d'étranglement (9b) et une vis de blocage (9c).

4. Dispositif de mesure d'affaissement selon l'une des revendications 1 à 3, dans lequel la valeur de mesure indiquée sur l'échelle de mesure (6) est numérisée au moyen d'une unité de saisie (16) et peut être transmise ainsi qu'évaluée quel que soit le lieu.
